# EUROPEAN PATENT APPLICATION

(11) **EP 3 015 431 A1**
(43) Date of publication of application: **04.05.2016**
(21) Application number: 14191289.9
(22) Date of filing: 31.10.2014
(51) Int. Cl.: C02F 1/00

(54) **Mounting for a fluid treatment device and fluid treatment system**

(71) Applicant: Brita GmbH, 65232 Taunusstein (DE)
(72) Inventor: Freystedt, Bernd, 65187 Wiesbaden (DE); Marx, Giselher, 65187 Wiesbaden (DE); Festner, Maria, 65185 Wiesbaden (DE)
(74) Representative: Meissner, Bolte & Partner GbR

(57) **Abstract**

A mounting for a replaceable fluid treatment device (14) having opposing fluid-pervious major surfaces includes a first part (3,4) including a socket (11,12) having an opening (10) at an axial end, through which at least part of the fluid treatment device (14) is insertable in axial direction. The socket (11,12) is provided with at least one fluid-permeable window at an opposite axial end. The mounting includes a second part (19) for attachment to the first part (3,4) at the opening (10) to lock a fluid treatment device (14) at least partly inserted through the opening (10) into place in a space for accommodating the fluid treatment device (14), when the second part (19) is attached to the first part (3,4). The second part (19) has at least one fluid-permeable window (22) facing the space when the second part (19) is attached to the first part (3,4). At least one sealing component (7) forming a sealing surface closed on itself about the axis (9) and lining the socket (11,12) at least laterally over at least part of the axial extent of the socket (11,12) and the space is provided.

## Description

The invention relates to a mounting for a replaceable fluid treatment device having opposing fluid-pervious major surfaces, the mounting including:
a first part including a socket having an opening at an axial end, through which at least part of the fluid treatment device is insertable in axial direction,
the socket being provided with at least one fluid-permeable window at an opposite axial end; and
a second part for attachment to the first part at the opening to lock a fluid treatment device at least partly inserted through the opening into place in a space for accommodating the fluid treatment device, when the second part is attached to the first part,
wherein the second part has at least one fluid-permeable window facing the space when the second part is attached to the first part.

The invention also relates to a fluid treatment system.

The invention also relates to a method of mounting a fluid treatment device having opposing fluid-pervious major surfaces in a fluid treatment system, including:
inserting at least part of the fluid treatment device in an axial direction through an opening of a socket provided in a first part of the fluid treatment system,
wherein the socket has at least one fluid-permeable window at an opposite axial end to the opening; and
locking the fluid treatment device into place by attaching a second part to the first part so that the opening is covered by a section of the second part including at least one fluid-permeable window exposed to a space accommodating the fluid treatment device.

A water filter bottle marketed by the applicant under the name "Fill & Go" includes a replaceable filter disc integrated into the lid. The filter disc is made of thermally bonded activated carbon. Its major surfaces are covered by non-woven material. In use, the disc is pressed into a holder, which is then placed into the lid from below. The disc is clamped between ring-shaped seals that contact the major surfaces of the disc to prevent a bypass of water. The holder is provided with an upstanding sealing ridge that presses against one major surface of the disc. The lid is provided with a ring-shaped elastic sealing component that presses against the other major surface of the disc. The holder is relatively elastic, which is only possible because it is clamped between the relatively rigid lid and the relatively rigid bottle at the rim surrounding the mouth of the latter. If one wished to arrange the disc in a mounting in the opening of a funnel of a jug-type water filter, then it would be necessary to provide a relatively rigid closure part in addition to a ring-shaped elastic component providing a seal against a major surface of the disc. One or the other of the elastic ring-shaped sealing components could not just be dispensed with, because it is difficult to manufacture the filter disc with plane-parallel major surfaces within a sufficiently tight tolerance range.

It is an object of the invention to provide a mounting, fluid treatment system and method of mounting a fluid treatment device that do not rely on a pair of ring-shaped sealing components pressing onto respective opposite surfaces of the fluid treatment device to avoid bypasses around the fluid treatment device.

This object is achieved according to a first aspect by the mounting according to the invention, which is characterised by at least one sealing component, forming a sealing surface closed on itself about the axis and lining the socket at least laterally over at least part of the axial extent of the socket and the space.

The replaceable fluid treatment device is of the type having opposing fluid-pervious major surfaces. Compared to a device with a housing defining inlet and outlet openings, such a device has a more uniform flow pattern and a relatively low resistance to flow. It can also have smaller axial dimensions for a given treatment efficacy. As much as possible of the upstream major surface should be available for the fluid to enter the device, but it is also necessary to provide seals to force the fluid to traverse the fluid treatment device, preferably over a certain distance. The mounting includes a first and a second part. When the second part is attached to the first part, a space for occupation by the fluid treatment device is formed. The space may be predominantly or entirely within the socket or the first and second parts may both comprise sockets. In that case, only part of the fluid treatment device is insertable into the socket in the first part in axial direction. The socket in the first part has an opening at an axial end through which at least part of the fluid treatment device is insertable in axial direction. At least one fluid-permeable window is provided at an opposite axial end, so that fluid may enter the space occupied by the fluid treatment device in use, and thus penetrate the fluid treatment device. The second part locks the fluid treatment device into place such as to prevent axial movement of the fluid treatment device. The second part has at least one fluid-permeable window facing, and thus open to, the space occupied by the fluid treatment device when the second part is attached to the first part. Thus, the fluid passing through the fluid treatment device can leave the chamber formed between the first and second parts when attached. At least one sealing component - in most embodiments there will be only one - forms a sealing surface closed on itself about the axis and lining the socket at least laterally over at least part of the axial extent of the socket and the space. Thus, a seal can be provided against a lateral surface of the fluid treatment device. This prevents a bypass of fluid in the axial direction past the fluid treatment device. The sealing component lines the socket, more particularly a side wall of the socket. It is thus positioned against the side wall or side wall section and distinct from it. It can therefore be made of a material having different properties. The side wall can support the sealing component, so that the sealing component can be made of relatively soft material. It is noted, however, that the sealing component need not be separable from the socket side wall. Because the at least one sealing component forms a sealing surface closed on itself about the axis, the fluid treatment device can be sealed on all sides. In principle, it would be sufficient to provide only the at least one sealing component to force the fluid through the fluid treatment device. However, in an embodiment, the lateral seal is provided towards one axial end and a further seal is provided at the opposite axial end of the space for accommodating the fluid treatment device. These seals can still be provided on only the first part, so that the second part may be a unitary component made of only one (type of) material. Because the sealing component can be made of a relatively deformable material, the fluid treatment device can be made relatively rigid. This means that it need not be compressed between the first and second parts. Where the fluid treatment device includes a fluid-pervious porous body, the porosity will thus stay relatively uniform throughout the porous body. A similar effect is achieved where the fluid treatment device comprises a pod including a casing of fluid-pervious sheet material, packed with fluid treatment material so as to have an essentially stable shape.

The sealing component may extend axially over a distance corresponding to the depth of the space and thus the thickness of the fluid treatment device. In other embodiments, it may line the socket over only part of the axial extent of the space or only part of the axial extent of the socket.

The fluid may in particular be a liquid. The seals may thus be only essentially liquid-tight, but not necessarily gas-tight.

In an embodiment, the second part includes an inwardly facing angled surface, arranged to engage at least one of the sealing component and a part supporting the sealing component so as to exert a radially inwardly directed force on at least an axial end section of the sealing component closest to the opening when the second part is advanced axially through attachment of the second part to the first part.

Thus, the opening, even with the sealing component lining the socket, can be relatively wide to admit the fluid treatment device. At this stage, the second part is not yet attached to the first part. The inwardly facing angled surface faces in a direction with a radially inwardly directed component and an axially directed component, thus partly radially inwards. It can be provided on a part of the second part that is wedged between the sealing component or the part supporting the sealing component and a further part, or it may act directly on the sealing component or part supporting it. The connection between the first and second part is such that the second part is advanced in axial direction towards the first part when it is attached. The angled surface engages at least one of the sealing component and a part supporting the sealing component. When engaged, the axial movement translates into a radial movement and/or compression of the sealing component to press it against the lateral surface of the fluid treatment device. Thus, a lateral seal is formed, at least near the opening of the socket.

In an embodiment, the sealing component lines a side wall of the socket up to an edge of the socket at an axial distance to the opening, and the sealing component extends radially inwards from the edge over a distance to provide a sealing surface closed on itself around the axis and facing in a direction having at least a component, e.g. a major component, parallel to the axis.

In this embodiment, it is sufficient if the sealing surface extends axially over only part of the thickness of the fluid treatment device, or if the sealing component is pressed only loosely against the lateral surface of the fluid treatment device at axial locations further removed from the opening of the socket. Short-cuts through the lateral surface of the fluid treatment device are still substantially prevented. Furthermore, the component providing the sealing surface facing in axial direction, being made of relatively deformable material, can compensate for deviations of the thickness of the fluid treatment device from a nominal value, allowing larger tolerance ranges. This is of particular use where the fluid treatment device includes a porous body made of thermally bonded material. Such material is only loosely pressed and is relatively elastic, making it difficult to achieve a defined thickness.

In an embodiment, the sealing component is supported by a part made of a harder material than that of the sealing component.

The sealing component can be pressed to deform in a relatively well-defined manner between the supporting part and the fluid treatment device. The supporting part can be fixed in position relative to the second part relatively accurately, as it is less deformable. It is not necessary for the second part to engage the sealing component directly. Furthermore, the sealing component can be more deformable, the better to conform to the fluid treatment device.

In a variant of this embodiment, the sealing component and the supporting part are sandwich-moulded.

The sealing component need therefore not be a loose component. This simplifies assembly. It is also ensured that the sealing component is correctly placed with respect to the fluid treatment device, even where it is not rigid enough to be self-supporting.

In an embodiment, the first part includes an assembly of a holder and a part supporting the holder, wherein the socket is provided in the holder, wherein the holder supports the at least one sealing component, and wherein the part supporting the holder is provided with an opening and the holder is positioned to force fluid flowing through the opening through the at least one fluid-permeable window.

The mounting needs to be dimensioned relatively accurately. It is typically provided on a larger part such as a funnel. This larger part need not be manufactured within such tight tolerance ranges. By separating the holder and the part supporting it, each can be manufactured relatively efficiently. Also, the material of the supporting part can be a material with different properties from those of the holder material. For example, the part supporting the holder can be made transparent and the holder opaque. Thus, the fluid treatment device can be hidden from view, but the fluid flow may remain visible. Where the holder and sealing component are obtained by sandwich-moulding, it is not necessary to manufacture the generally much larger part supporting the holder in the same mould. The holder is fixed in or across the opening to force the fluid flowing through the opening through the at least one fluid-permeable window that is provided at the opposite axial end of the socket to the opening of the socket.

In a variant, the holder is surrounded by a further sealing component facing radially outwards.

This allows the holder to be placed sealingly in the opening in the part supporting the holder. The further sealing component may be made of a different material than that of the holder, in particular a more deformable material.

In a particular variant, the holder and the further sealing component are sandwich-moulded.

In particular, the holder, the further sealing component and the sealing component may be sandwich-moulded together, with the sealing component and further sealing component being made of the same material. The holder would generally be made of a more rigid material. Only a single part need be handled during assembly in this variant. Loose sealing elements cannot become displaced.

In an embodiment in which the first part includes an assembly of a holder and a part supporting the holder, the socket is provided in the holder, the holder supports the at least one sealing component, and the part supporting the holder is provided with an opening and the holder is positioned to force fluid flowing through the opening through the at least one fluid-permeable window, the second part is releasably connectable to the part supporting the holder to lock a fluid treatment device at least partly inserted through the opening into place.

The part supporting the holder can be relatively rigid to ensure a strong connection between it and the second part. The holder may be slightly deformed when the second part is attached, so that the fluid treatment device is sealed more tightly. This is of particular use where the second part includes an inwardly facing angled surface, arranged to engage the holder so as to compress at least an axial end section of the sealing component closest to the opening of the socket radially inwards when the second part is advanced axially through attachment of the second part to the part supporting the holder.

In an embodiment, the second part comprises a fastener for placement on a projecting cylindrical part of the first part, the fastener being provided with an internal connection part, e.g. an internal screw thread, for co-operating with a connection part on an outside of the projecting cylindrical part to attach the second part to the first part.

This embodiment is relatively user-friendly, because the user can grab hold of the fastener on the outside and fasten it onto the projecting cylindrical part as one would a cap on bottle. If the second part were to be provided with an external thread and the first part with an internal thread, the second part would need to have dimples for the user's fingers or similar means allowing the user to turn the second part. The cylindrical part may project only in the sense that its sides are exposed. There is thus space around it for e.g. a skirt of the fastener.

In an embodiment, the space for accommodating the fluid treatment device has a depth, corresponding to its axial dimension, smaller than its width.

This embodiment is for receiving relatively thin, essentially plate-shaped fluid treatment devices. The fluid traverses the thickness of the fluid treatment device, in use. Providing a lateral seal suffices to prevent bypasses. Shortcuts through the fluid treatment device at its edges can be largely prevented with a sealing component providing a sealing surface with a limited axial extent. By contrast, lateral sealing would require a large sealing surface to prevent shortcuts if the fluid treatment device were to have an elongated cylindrical shape.

In an embodiment, the space for accommodating the fluid treatment device is shaped to receive an essentially planar fluid treatment device.

This ensures a relatively uniform treatment. The lateral sealing ensures that the fluid traverses the thickness of the fluid treatment device. The planar shape of the fluid treatment device ensures that the length of the path between the major surfaces of the fluid treatment device is generally the same everywhere.

In an embodiment, the space is shaped to receive an essentially circle-cylindrically shaped fluid treatment device, e.g. a disc-shaped fluid treatment device.

The sealing component can be pressed radially inwards such as to compress it uniformly along the circumference of the fluid treatment device. The risk of leaks is thereby reduced. Furthermore, the fluid treatment device can be inserted in any rotary position. Where the fluid treatment device is disc-shaped, the sealing component need not have a large axial dimension to prevent short-cuts through the lateral surface of the fluid treatment device.

According to another aspect, the fluid treatment system according to the invention includes a barrier separating an upstream part of the fluid treatment system from a downstream part of the fluid treatment system and a mounting according to the invention, arranged such that a flow path through the barrier extends through the mounting.

This embodiment ensures that fluid passing through the barrier is treated by the fluid treatment device. Bypasses are prevented without the need to resort to annular resilient sealing components pressed against opposite major surfaces of the fluid treatment device.

In an embodiment, the barrier is comprised in a container for forming a reservoir of liquid to be treated.

The fluid treatment system may include a suction pump for emptying the reservoir through the fluid treatment system or it may be gravity-driven. The mounting allows the fluid treatment device to be placed in an outlet of the container. In this configuration, the container is also referred to as a funnel or hopper.

A variant of this embodiment further includes a vessel for collecting treated liquid, wherein the container is arranged to be suspended in the vessel.

This variant thus forms a gravity-driven fluid treatment system. The mounting may be provided on the side of the container facing the vessel, for example.

An embodiment of the fluid treatment system includes a mounting of which the first part includes an assembly of a holder and a part supporting the holder, wherein the socket is provided in the holder, wherein the holder supports the at least one sealing component, and wherein the part supporting the holder is provided with an opening and the holder is positioned to force fluid flowing through the opening through the at least one fluid-permeable window, wherein the part supporting the holder is comprised in the container.

In a variant of this embodiment, the container includes an essentially cylindrical wall section, and the holder is located in an opening defined by the cylindrical wall section to form an end wall of the reservoir.

This makes the container relatively easy to manufacture. The inner surface of the cylindrical wall section offers a relatively large surface to which the holder can be fixed, e.g. by being sealingly clamped or bonded, for example adhesively bonded. The cylindrical wall section is relatively simple to mould or extrude.

An embodiment of the fluid treatment system further includes a replaceable fluid treatment device having opposing major surfaces that are fluid-pervious over a majority of their surface area.

The major surfaces may be essentially parallel, e.g. plan-parallel. At least one of them may be entirely fluid-pervious. Alternatively, it or they may be formed by one or more pieces of sheet material, e.g. textile material, one or more pieces of mesh, one or more screens or sieves or the like, supported by a frame. It or they would then be fluid-pervious everywhere except for where constituted by the frame.

The fluid treatment device is self-supporting, in contrast to a flexible bag or pouch. It is relatively rigid, so as to retain its shape. Such a device can be supported in the mounting only at its edges, for example.

In one embodiment, the fluid treatment device comprises a pod including a casing of fluid-pervious sheet material, packed with fluid treatment material such as to have an essentially stable shape. The fluid treatment material may be loose, e.g. granular and/or fibrous material.

Alternatively, the device may comprise a frame supporting at least one fluid-pervious cover forming at least one of the opposing major surfaces. The frame and the cover form a container in which fluid treatment material, e.g. loose fluid treatment material, is arranged. The container may be refillable with fluid treatment material in one such embodiment. Containers of similar construction are known from the field of coffee brewing systems as alternatives to coffee pods.

In an alternative embodiment, the fluid treatment device includes a fluid-pervious porous body.

This embodiment is relatively straightforward to manufacture. It offers relatively high rigidity for a relatively high amount of fluid treatment material. Moreover, a relatively uniform pattern of flow through the fluid treatment device is made possible. The replaceable fluid treatment device has no further housing, the porous body being self-supporting and making also the fluid treatment device self-supporting.

In an embodiment, the fluid-pervious porous body is made of thermally bonded material, e.g. thermally bonded particulate material.

Details of processes and materials for manufacturing a porous body made of thermally bonded material can be found e.g. in Strauß, S, "Gesinterte Kunststoff-Formteile für die Fest-/Flüssig-Filtration", Technische Mitteilungen 85 (2), July 1992, pp. 100-104. The binder particles form point-like bonds leaving a relatively high porosity. Where the material includes active material such as activated carbon, a larger surface area of this material is left exposed. Because a relatively low pressure is applied during the bonding process and the resulting structure is slightly elastic, it is difficult to control the dimensions of the porous body in the direction in which the pressure is applied exactly. Where the porous body is a plate-shaped, e.g. disc-shaped, porous body, this means that the thickness cannot easily be set within a narrow tolerance range. The width, however, is set much more exactly. Thus, the sealing component can be compressed to a relatively well-defined extent to provide adequate sealing.

In an embodiment, at least one surface of the fluid-pervious porous body is covered by a layer of fluid-permeable sheet material.

This is practical where the porous body is made of thermally bonded material, especially if it is particulate material. A fraction with smaller particle size need not be separated and the bond can be relatively loose, since the fluid-permeable sheet material can be provided on at least the downstream side to retain any loose particles. Moreover, abrasion during handling can be prevented. The covered surface(s) will generally be the major surface(s). The lateral surface of the porous body may be left uncovered, so that the width of the fluid treatment device is determined by the width of the porous body only and the degree of radial deformation when the sealing component is pressed against the lateral surface is relatively well-defined.

In a variant, at least one of the fluid-pervious porous body and the fluid treatment device has a thickness, corresponding to its axial dimension, smaller than its width.

The porous body or at least the fluid treatment device are thus essentially plate-shaped. This type of fluid treatment device is easy to manufacture efficiently. In particular, the porous body can be cut, e.g. stamped, from a larger sheet or web of porous material, as opposed to being individually moulded.

In an embodiment, at least one of the fluid-pervious porous body and the fluid treatment device is essentially planar.

This ensures relatively uniform fluid treatment, as long as shortcuts at the edges of the fluid treatment device are prevented by the seal provided by the mounting.

In an embodiment, at least one of the fluid-pervious porous body and the fluid treatment device is circle-cylindrically shaped, e.g. disc-shaped.

In this embodiment, there is no correct rotational orientation with which the fluid treatment device is to be placed in the mounting. This makes it easier to ensure that the sealing surface is correctly applied against the lateral surface of the fluid treatment device with a relatively uniform pressure along the circumference of the fluid treatment device.

In an embodiment, the thermally bonded material includes material for the treatment of fluid in a diffusive process, e.g. a material for the treatment of fluid by sorption.

The mounting finds good use in such an embodiment, because the contact time of the fluid with the material determines the degree of treatment. With the mounting, shortcuts and bypasses can be prevented relatively well, ensuring uniform contact times for all of the fluid.

According to another aspect, the method according to the invention is characterised in that at least one sealing component lining at least part of the socket is sealingly arranged against and around the fluid treatment device.

Thus, the at least one sealing component is arranged to prevent any flow of at least liquid between the fluid treatment device and the side wall(s) of the socket. Fluid flowing from the at least one fluid-permeable window in the socket to the at least one fluid-permeable window in the second part is forced to flow through the fluid treatment device, in particular any fluid-pervious porous body included therein. This is achieved without the need to press annular sealing elements against opposite major surfaces of the fluid treatment device.

In an embodiment, the at least one sealing component is compressed radially against the fluid treatment device subsequent to the insertion of the fluid treatment device.

Thus, the fluid treatment device can first be inserted relatively easily. There is no need to force the sealing component radially outwards to free the space in which the fluid treatment device is to be accommodated. The sealing component is then compressed radially to ensure adequate and uniform sealing.

In a variant, the compression is effected by attaching the second part to the first part, e.g. by advancing a part including an inwardly facing angled surface in axial direction.

Sufficient compression is thus always ensured. The extent to which the sealing component is compressed is defined relatively well, since the extent to which the second component needs to be advanced axially to attach it properly is also defined relatively well. Moreover the mounting is relatively easy to accomplish, since it suffices to place the fluid treatment device in the socket and attach the second part.

In an embodiment, the fluid treatment device is sealingly engaged in a closed loop by at least one sealing component at a different axial location to the axial location at which the at least one sealing component lining the socket is sealingly arranged against and around the fluid treatment device.

The area of engagement forms a closed loop, through which fluid is forced to flow, in use. This embodiment helps prevent short-cuts through the fluid treatment device. It ensures that the fluid always has to traverse the fluid treatment device over a certain minimum axial distance.

In a variant of this embodiment, an axial end face of the fluid treatment device is sealingly engaged at the different axial location.

The minimum axial distance over which the fluid has to traverse the fluid treatment device can thus be maximised with respect to the thickness of the fluid treatment device. Moreover, it is not necessary to compress sealing components against the lateral surface(s) of the fluid treatment device at a second axial location. The axial end face will generally be the axial end face facing away from the opening, so that the at least one sealing component is provided between the end face of the fluid treatment device and a wall or wall section of the socket facing in axial direction. The relatively resilient sealing component can thus also play a role in ejecting the fluid treatment device when the second part is removed to replace it.

In a variant of this embodiment, the axial end face is sealingly engaged in a closed loop by at least one of the at least one sealing components lining the socket and sealingly arranged against and around the fluid treatment device.

In this embodiment, relatively few parts are required. The at least one sealing component may extend over an edge of the fluid treatment device.

In an embodiment, the fluid treatment device is self-supporting.

In an embodiment, the fluid treatment device includes a fluid-pervious porous body.

The fluid-pervious porous body may be made of thermally bonded material, e.g. thermally bonded particulate material.

Details of processes and materials for manufacturing a porous body made of thermally bonded material can be found e.g. in Strauß, S, "Gesinterte Kunststoff-Formteile für die Fest-/Flussig-Filtration", Technische Mitteilungen 85 (2), July 1992, pp. 100-104. The binder particles form point-like bonds, leaving a relatively high porosity. Where the material includes active material such as activated carbon, a larger surface area of this material is left exposed. Because a relatively low pressure is applied during the bonding process and the resulting structure is slightly elastic, it is difficult to control the dimensions of the porous body in the direction in which the pressure is applied exactly. Where the porous body is a plate-shaped, e.g. disc-shaped, porous body, this means that the thickness cannot easily be set within a narrow tolerance range. The width, however, is set much more exactly. Thus, the sealing component can be compressed to a relatively well-defined extent to provide adequate sealing.

In an embodiment, at least one surface of the fluid-pervious porous body is covered by a layer of fluid-permeable sheet material.

This is practical where the porous body is made of thermally bonded material, especially if it is particulate material. A fraction with smaller particle size need not be separated and the bond can be relatively loose, since the fluid-permeable sheet material can be provided on at least the downstream side to retain any loose particles. Moreover, abrasion during handling can be prevented. The lateral surface of the porous body may be left uncovered, so that the width of the fluid treatment device is determined by the width of the porous body only and the degree of radial deformation when the sealing component is pressed against the lateral surface is relatively well-defined.

In an embodiment of the method, at least one of the fluid-pervious porous body and the fluid treatment device has a thickness, corresponding to its axial dimension, smaller than its width.

The porous body or at least the fluid treatment are thus essentially plate-shaped. This type of fluid treatment device is easy to manufacture efficiently. In particular, the porous body can be cut, e.g. stamped, from a larger sheet or web of porous material, as opposed to being individually moulded.

In an embodiment of the method, at least one of the fluid-pervious porous body and the fluid treatment device is essentially planar.

This ensures relatively uniform fluid treatment, as long as shortcuts at the edges of the fluid treatment device are prevented by the seal provided around and against the fluid treatment device.

In an embodiment, at least one of the fluid-pervious porous body and the fluid treatment device is circle-cylindrically shaped, e.g. disc-shaped.

In this embodiment, there is no single or limited number of correct rotational orientations with which the fluid treatment device is to be placed in the socket. This makes it easier to ensure that the at least one sealing component is correctly applied against the lateral surface of the fluid treatment device with a relatively uniform pressure along the circumference of the fluid treatment device.

In an embodiment of the method, the fluid treatment device, e.g. a fluid-pervious porous body included therein, includes material for the treatment of fluid in a diffusive process, e.g. a material for the treatment of fluid by sorption.

The method is of particular use in conjunction with such a fluid treatment device, because the contact time of the fluid with the material determines the degree of treatment. With the mounting, shortcuts and bypasses can be prevented relatively well, ensuring uniform contact times for all of the fluid.

In an embodiment of the method, the fluid treatment system is a fluid treatment system according to the invention.

The invention will be explained in further detail with reference to the accompanying embodiments, in which:
- Fig. 1: is a schematic diagram of a gravity-driven liquid treatment system including a reservoir for liquid to be treated and a jug for collecting treated liquid;
- Fig. 2: is a perspective view of a holder for forming a bottom of the reservoir;
- Fig. 3: is a cross-sectional view of the holder of Fig. 2;
- Fig. 4: is a detailed cross-sectional view of the holder of Figs. 2 and 3; and
- Fig. 5: is a cross-sectional view of a lower end of the reservoir without the holder.

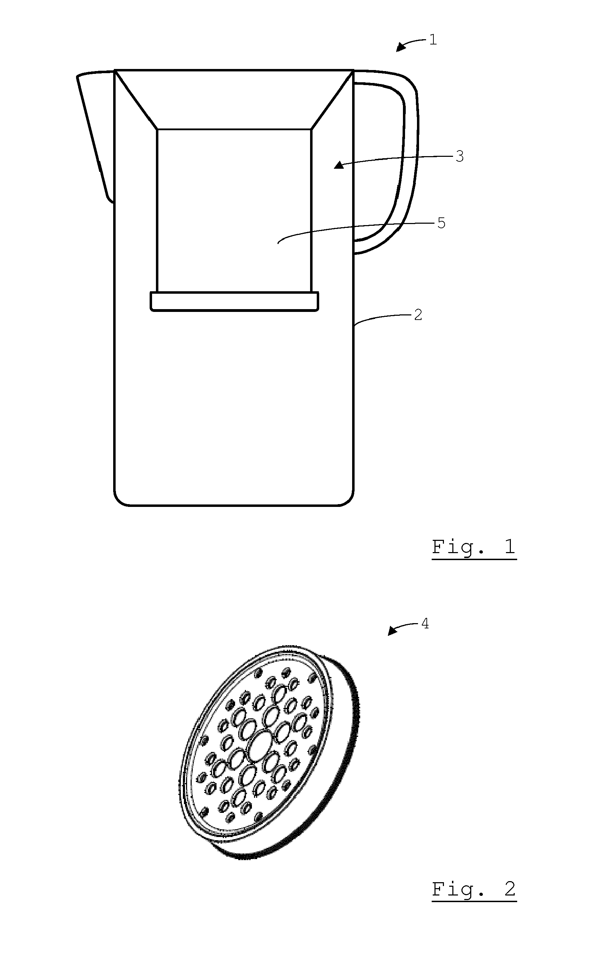

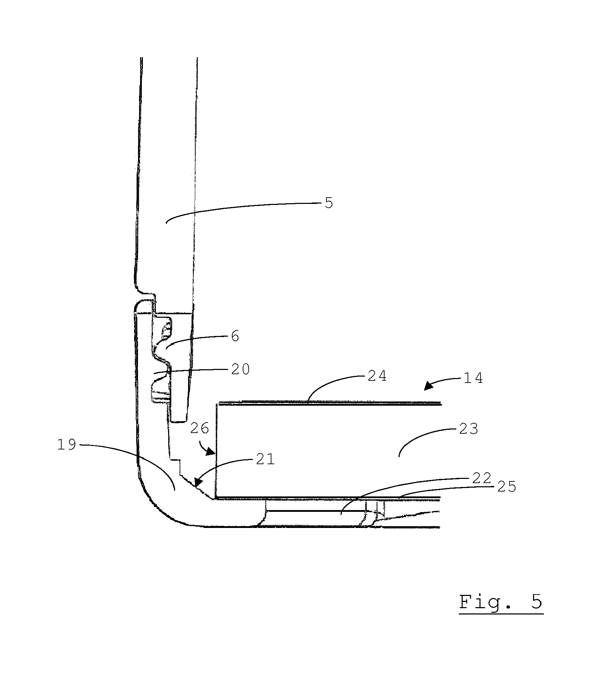

A liquid treatment system 1 (Fig. 1) includes a jug 2 for collecting treated liquid. The liquid may be drinking water, for example. Suspended within the jug 2, e.g. by a flange (not shown) supported by an edge of the jug, is a container. The container comprises a main container part 3 and a holder 4 (Figs. 2-4) forming a bottom wall of the container. The container forms a reservoir of liquid to be treated, when filled with liquid. The main container part 3 includes a funnel-shaped section and a cylindrical wall section 5 projecting from the funnel-shaped section. The holder 4 is inserted into an opening at the lower end of the cylindrical wall section 5. With reference to Fig. 5, in which the holder 4 has been omitted for clarity, it can be seen that a lower end of the cylindrical wall section tapers slightly and is provided with an external screw thread 6.

The main container part 3 may be made of plastic material. It may be transparent or translucent. If the jug 2 is also made of transparent or translucent material, a user is therefore afforded a view of the liquid or at least able to determine the liquid level in the container.

The holder 4 may also be made of plastic. It may be opaque in one embodiment. It is provided with an inner sealing component 7 and an outer sealing component 8. The materials of the inner and outer sealing components 7,8 may be the same. The holder 4 and the inner and outer sealing components 7,8 may form a unitary part, obtainable e.g. by sandwich-moulding. The material of the inner and outer sealing components 7,8 is softer and less rigid than that of the holder 4. The holder 4 supports the inner and outer sealing components 7,8.

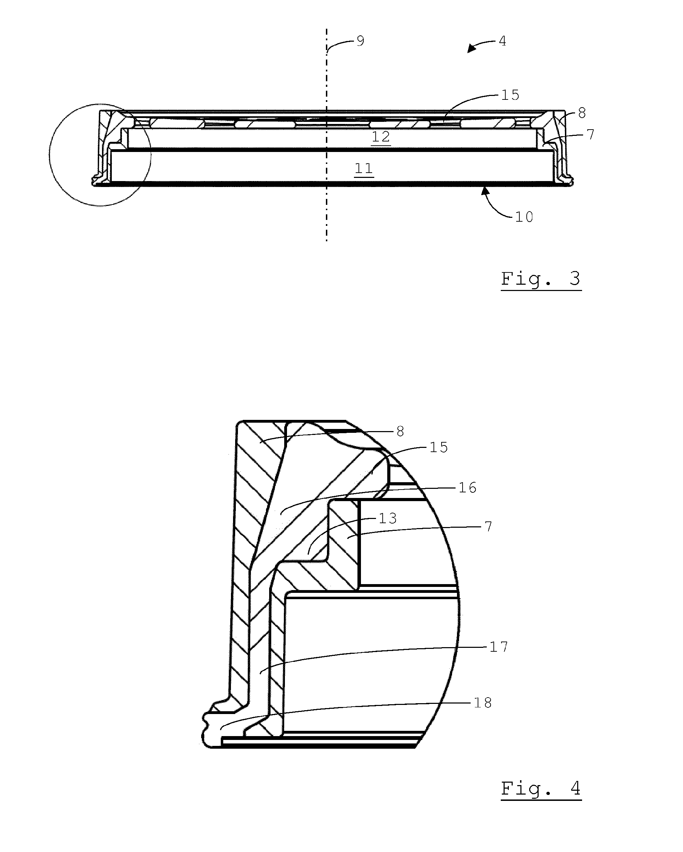

A socket is formed in the holder 4. With respect to a central axis 9 (Fig. 2) perpendicular to an opening 10 of the socket, the socket comprises first and second consecutive socket sections 11,12, seen in axial direction. The socket sections 11,12 are centred on the central axis 9. Both socket sections 11,12 are essentially circle-cylindrical in shape. The first socket section 11 has a larger diameter than the second socket section 12. An annular wall section 13 (Fig. 3) is provided at the transition between the two sections 11,16. The inner sealing component 7 lines the side wall of the first socket section 11, the side wall of the second socket section 12 and the annular wall section 13.

The first socket section 11 defines a space fully occupied by a liquid treatment element 14 (Fig. 5), when inserted through the socket opening 10. This space is lined laterally over its full axial extent by the inner sealing component 7 in the illustrated embodiment.

A wall 15 essentially perpendicular to the central axis 9 is provided with multiple through-going openings forming liquid-permeable windows to the socket. Liquid from the reservoir can enter the socket through these windows, in use. A side wall of the holder 4 includes an, in use, upper side wall section 16 that tapers towards an axial end opposite the axial end at which the socket opening 10 is provided. The outer sealing component 8 covers this upper side wall section 16 and increases in thickness, so that the overall taper is only slight. This section of the outer sealing component is compressed by the tapering section of the cylindrical wall section 5 of the container, when the holder 4 is positioned in the opening of the latter. The force exerted by the compressed outer sealing component 8 may be sufficient to clamp the holder 4. In another embodiment, an adhesive is used to fix the holder 4 in place.

An, in use lower, side wall section 17 adjoins the upper side wall section 16. The lower side wall section 17 is thinner than the upper side wall section 16. Like the latter, it is also covered by the outer sealing component 8. However, an end section 18 is left exposed. This side wall end section 18 is rounded to face in both axial and radial direction. Furthermore, the side wall end section 18 protrudes from the lower end of the cylindrical wall section 5 of the container, in use.

A fastener 19 (Fig. 5) includes an internal screw thread 20 for engaging the external screw thread 6 on the cylindrical wall section 5, over which it can be placed. It is thus releasably connectable directly to the cylindrical wall section 5 of the container, which in turn supports the holder 4. In this way, the liquid treatment element 14 can be locked into place. It is also prevented that the holder 4 falls out of the opening defined by the cylindrical wall section 5 under the weight of the liquid in the reservoir of untreated liquid. This support effect is obtained regardless of whether the holder 4 is bonded into place.

The fastener 19 is provided with a partly radially inwardly facing angled surface 21 for engaging the side wall end section 18 of the holder 4 during attachment of the fastener 19 to the cylindrical wall section 5. As the fastener 19 is screwed on and thus advanced in axial direction, the side wall end section 18 moves along the angled surface 21, and is thereby forced radially inwards. The lower side wall section 17 flexes as a consequence.

Thus, an axial end section of the inner sealing component 7 is compressed between the lower side wall section 17 and a lateral surface 26 (Fig. 5) of the liquid treatment element 14, when present. A lateral seal between the holder 4 and the liquid treatment element 14 is provided at an axial location close to the socket opening 10.

A further seal is provided at the axial location of the annular wall section 13 (Fig. 3), in that the inner sealing component 7 extends radially inwards from an edge of the first socket section 11 and faces in axial direction towards the socket opening 10. The fastener 19 engages the liquid treatment element 14 to press it against this section of the inner sealing component 7 in axial direction. Thus, the single sealing component 7 provides a seal in a closed loop around the central axis 9 at two axial locations in the socket. The fastener 19 need not be provided with any sealing components made of a different material than the rest of the fastener 19.

The fastener 19 has an end wall transverse to the central axis 9, when attached, in which through-going openings 22 are provided. These form liquid-permeable windows facing the space occupied by the liquid treatment element 14, and thus the liquid treatment element 14 when present.

The liquid treatment element 14 is essentially disc-shaped. The lateral surface 26 is thus essentially cylindrical in shape. The liquid treatment element 14 in this example includes a liquid-pervious porous body 23 made of thermally bonded material.

The material includes both a binder and an active material, in particular a sorbent. Examples include activated carbon, heavy metal sorbents, ion exchange materials, chelating agents and the like. In other embodiments, the material includes a component that leaches into the liquid as the liquid passes through the porous body 23.

The binder is a material that binds other particles when subjected to heat or radiation of another form. In the examples to be discussed herein, the binder is a thermoplastic binder, for example an ultra-high-molecular-weight polyethylene or high-density polyethylene. The melting point (as determined using differential scanning calorimetry) of the binder is at least 120° C, e.g. in the range of 120-150° C and it is thermally stable to at least 300° C. The particle size of the binder may be of the order of 10-1000 µm, for example. The particles of binder material may have an average diameter larger than that of the particles of active material. Thus, they increase the pore size without reducing the available surface area of the active material.

In the majority of the porous body 23, the porosity has a value larger than 20 %, in particular larger than 30 %, more particularly larger than 40 %. It may have a value smaller than 80 %, in particular smaller than 70 %, more particularly smaller than 60 %. Typically, the average pore size in the majority of the porous body 23 will be larger than 2 µm, in particular larger than 5 µm. This average pore size will be smaller than 100 µm, in particular smaller than 70 µm, more particularly smaller than 50 µm.

Major surfaces of the porous body 23 (Fig. 5) are each covered by a layer 24,25 of liquid-pervious sheet material. The sheet material is a piece of woven or non-woven textile, e.g. a mesh or fleece, for example a non-woven made of point-bonded polypropylene or polyethylene fibres. In an alternative embodiment, only one major surface may be covered by a layer of such sheet material, but a user must then take care to insert the liquid treatment element 14 into the socket the right way up. The lateral surface of the porous body 23 is left exposed to form the lateral surface 26 of the liquid treatment element 14.

To mount the liquid treatment element 14, it is inserted at least partly through the socket opening 10 with the lower side wall section 17 still in a relaxed state and supported by the tapering lower end of the cylindrical wall section 5. In this state, there is sufficient clearance to insert the liquid treatment element 14 with minimum force and without risk of distorting the shape of the inner sealing component.

Then, the fastener 19 is screwed on. As the fastener 19 advances in axial direction towards the holder 4, the lower wall section 17 is flexed radially inwards to compress the inner sealing component 7 in radial direction against the lateral surface 26 of the liquid treatment element 14. As the fastener 19 approaches its final position, the liquid treatment element 14 is also pressed against the section of the inner sealing component 7 covering the annular wall section 13. Liquid can thus pass from the reservoir into the jug 2 through the holder 4 only by traversing the liquid treatment element 14 over substantially its entire thickness.

The invention is not limited to the embodiments described above, which may be varied within the scope of the accompanying claims. For example, the holder 4 and/or the fastener 19 may be made of opaque material to hide the liquid treatment element. Instead of or in addition to layers 24,25 of sheet material covering the porous body 23, there may be layers covering the liquid-permeable windows in the holder 4 and/or the fastener 19.

### List of reference numerals

- 1: - liquid treatment system
- 2: - jug
- 3: - main container part
- 4: - holder
- 5: - cylindrical wall section
- 6: - external screw thread
- 7: - inner sealing component
- 8: - outer sealing component
- 9: - axis
- 10: - socket opening
- 11: - 1^{st} socket section
- 12: - 2^{nd} socket section
- 13: - annular wall section
- 14: - liquid treatment element
- 15: - end wall
- 16: - upper side wall section
- 17: - lower side wall section
- 18: - side wall end section
- 19: - fastener
- 20: - internal screw thread
- 21: - inwardly facing surface
- 22: - fastener window
- 23: - porous body
- 24: - upper layer of sheet material
- 25: - lower layer of sheet material
- 26: - lateral surface

## Claims

1. Mounting for a replaceable fluid treatment device (14) having opposing fluid-pervious major surfaces, the mounting including:
a first part (3,4) including a socket (11,12) having an opening (10) at an axial end, through which at least part of the fluid treatment device (14) is insertable in axial direction,
the socket (11,12) being provided with at least one fluid-permeable window at an opposite axial end; and
a second part (19) for attachment to the first part (3,4) at the opening (10) to lock a fluid treatment device (14) at least partly inserted through the opening (10) into place in a space for accommodating the fluid treatment device (14), when the second part (19) is attached to the first part (3,4),
wherein the second part (19) has at least one fluid-permeable window (22) facing the space when the second part (19) is attached to the first part (3,4), **characterised by**
at least one sealing component (7), forming a sealing surface closed on itself about the axis (9) and lining the socket (11,12) at least laterally over at least part of the axial extent of the socket (11,12) and the space.

2. Mounting according to claim 1,
wherein the second part (19) includes an inwardly facing angled surface (21), arranged to engage at least one of the sealing component (7) and a part supporting the sealing component (7) so as to exert a radially inwardly directed force on at least an axial end section of the sealing component (7) closest to the opening (10) when the second part (19) is advanced axially through attachment of the second part (19) to the first part (3,4).

3. Mounting according to claim 1 or 2,
wherein the sealing component (7) lines a side wall of the socket (11,12) up to an edge of the socket (11,12) at an axial distance to the opening (10), and
wherein the sealing component (7) extends radially inwards from the edge over a distance to provide a sealing surface closed on itself around the axis (9) and facing in a direction having at least a component, e.g. a major component, parallel to the axis (9).

4. Mounting according to any one of the preceding claims,
wherein the first part (3,4) includes an assembly of a holder (4) and a part (3) supporting the holder (4),
wherein the socket (11,12) is provided in the holder (4), wherein the holder (4) supports the at least one sealing component (7), and
wherein the part (3) supporting the holder (4) is provided with an opening (10) and the holder (4) is positioned to force fluid flowing through the opening (10) through the at least one fluid-permeable window.

5. Mounting according to claim 4,
wherein the holder (4) is surrounded by a further sealing component (8) facing radially outwards.

6. Mounting according to claim 4 or 5,
wherein the second part (19) is releasably connectable to the part (3) supporting the holder (4) to lock a fluid treatment device (14) at least partly inserted through the opening (10) into place.

7. Mounting according to any one of the preceding claims,
wherein the second part (19) comprises a fastener for placement on a projecting cylindrical part (5) of the first part (3,4), the fastener being provided with an internal connection part (20), e.g. an internal screw thread, for co-operating with a connection part (6) on an outside of the projecting cylindrical part (5) to attach the second part (19) to the first part (3,4).

8. Fluid treatment system, including a barrier separating an upstream part of the fluid treatment system from a downstream part of the fluid treatment system and a mounting according to any one of claims 1-7, arranged such that a flow path through the barrier extends through the mounting.

9. Fluid treatment system according to claim 8,
wherein the barrier is comprised in a container (3,4) for forming a reservoir of liquid to be treated.

10. Fluid treatment system according to claim 9,
further including a vessel (2) for collecting treated liquid,
wherein the container (3,4) is arranged to be suspended in the vessel (2).

11. Fluid treatment system according to claim 9 or 10,
including a mounting according to any one of claims 4-6,
wherein the part (3) supporting the holder (4) is comprised in the container.

12. Fluid treatment system according to claim 11,
wherein the container (3,4) includes an essentially cylindrical wall section (5), and
wherein the holder (4) is located in an opening defined by the cylindrical wall section (5) to form an end wall of the reservoir.

13. Method of mounting a fluid treatment device (14) having opposing fluid-pervious major surfaces in a fluid treatment system (1), including:
inserting at least part of the fluid treatment device (14) in an axial direction through an opening (10) of a socket (11,12) provided in a first part (3,4) of the fluid treatment system (1),
wherein the socket (11,12) has at least one fluid-permeable window at an opposite axial end to the opening (10); and
locking the fluid treatment device (14) into place by attaching a second part (19) to the first part (3,4) so that the opening (10) is covered by a section of the second part (19) including at least one fluid-permeable window (22) exposed to a space accommodating the fluid treatment device (14), **characterised in that**
at least one sealing component (7) lining at least part of the socket (11,12) is sealingly arranged against and around the fluid treatment device (14).

14. Method according to claim 13,
wherein the at least one sealing component (7) is compressed radially against the fluid treatment device (14) subsequent to the insertion of the fluid treatment device (14).

15. Method according to claim 14,
wherein the compression is effected by attaching the second part (19) to the first part (3,4), e.g. by advancing a part (19) including an inwardly facing angled surface (21) in axial direction.
